# EUROPÄISCHE PATENTSCHRIFT

(11) **EP 0 981 557 B1**
(45) Veröffentlichungstag und Bekanntmachung des Hinweises auf die Patenterteilung: **07.08.2002**
(21) Anmeldenummer: 98928229.8
(22) Anmeldetag: 07.05.1998
(51) Int. Cl.: C08F 222/00, C08F 224/00, C10L 1/18, C10L 1/22, C10L 1/24

(54) **FLIESSVERBESSERER FÜR ERDÖLMITTELDESTILLATE**
FLOW ENHANCER FOR PETROLEUM MIDDLE DISTILLATES
AMELIORATEUR D'ECOULEMENT POUR DISTILLATS MOYENS DE PETROLE

(30) Priorität: 09.05.1997 DE 19719689
(43) Veröffentlichungstag der Anmeldung: 01.03.2000
(73) Patentinhaber: BASF AKTIENGESELLSCHAFT, 67056 Ludwigshafen (DE)
(72) Erfinder: FAUL, Dieter, D-67150 Niederkirchen (DE); WENDEROTH, Bernd, D-68623 Lampertheim (DE); DRALLE-VOSS, Gabriele, D-64665 Alsbach-Hähnlein (DE); SCHORNICK, Gunnar, D-67271 Neuleiningen (DE)
(74) Vertreter: Isenbruck, Günter
(86) Internationale Anmeldenummer: EP9802686
(87) Internationale Veröffentlichungsnummer: WO9851719

(56) Entgegenhaltungen:
- WO-A-90/12821
- WO-A-95/25755
- DE-A- 2 531 194

## Beschreibung

Die Erfindung betrifft Copolymerisate, Verfahren zu ihrer Herstellung, diese enthaltende Gemische und Konzentrate sowie Erdölmitteldestillatzusammensetzungen, sowie ihre Verwendung als Fließverbesserer und Paraffindispergatoren.

Mitteldestillate, wie Gasöle, Dieselöle oder Heizöle, die durch Destillation aus Erdölen gewonnen werden, haben je nach Herkunft des Rohöls unterschiedliche Gehalte an Paraffinen. Bei tieferen Temperaturen kommt es zur Ausscheidung fester Paraffine. Man spricht vom Trübungspunkt (Cloud Point, CP) des Raffinats. Bei weiterer Abkühlung bilden die plättchenförmigen n-Paraffinkristalle eine sogenannte "Kartenhausstruktur", die zur Stockung des Mitteldestillates führt, obwohl der überwiegende Teil des Mitteldestillates noch flüssig ist. Durch die ausgefallenen n-Paraffine im Temperaturbereich zwischen Trübungspunkt (CP) und Stockpunkt (Pour Point) wird die Fließfähigkeit der Erdöldestillat-Kraftstoffe erheblich beeinträchtigt. Die Paraffine verstopfen Filter und verursachen eine ungleichmäßige oder völlig unterbrochene Kraftstoffzufuhr zu den Verbrennungsaggregaten. Ähnliche Störungen treten bei Heizölen auf.

Es ist seit langem bekannt, daß durch geeignete Zusätze das Kristallwachstum der Paraffine in den Erdölmitteldestillaten, Brenn- und Kraftstoffen modifiziert werden kann. Gut wirksame Additive verhindern, daß die Paraffine in den Mitteldestillaten derartige Kartenhausstrukturen ausbilden und bei Temperaturen wenige Grad Celcius unterhalb der Temperatur, bei welcher die ersten Paraffinkristalle auskristallisieren, bereits fest werden. Es werden statt dessen feine, gut kristallisierte, separate Paraffinkristalle gebildet, die Filter in Kraftfahrzeugen und Heizungsanlagen passieren oder zumindest einen für den flüssigen Teil der Mitteldestillate durchlässigen Filterkuchen bilden, so daß ein störungsfreier Betrieb sichergestellt ist.

In Abhängigkeit von der Rohölprovenienz und des Fraktionsschnittes der Raffinerie gibt es aber Mitteldestillate, in denen übliche Fließverbesserer kein oder kein ausreichendes Ansprechverhalten zeigen.

Ein weiterer Nachteil üblicher Fließverbesserer beruht darin, daß die ausgefallenen Paraffinkristalle aufgrund ihrer gegenüber dem flüssigen Teil höheren Dichte dazu neigen, sich beim Lagern mehr und mehr am Boden des Behälters abzusetzen. Dadurch bildet sich im oberen Behälterteil eine homogene paraffinarme Phase und am Boden eine zweiphasige paraffinreiche Schicht. Da sowohl in Fahrzeugtanks als auch in Lager- oder Liefertanks der Mineralölhändler der Abzug des Mitteldestillates meist wenig oberhalb des Behälterbodens erfolgt, besteht die Gefahr, daß die hohe Konzentration an festen Paraffinen zu Verstopfungen von Filtern und Dosiereinrichtungen führt. Diese Gefahr wird um so größer, je weiter die Lagertemperatur den Cloud Point des Mitteldestillats unterschreitet, da die ausgeschiedene Paraffinmenge mit sinkender Temperatur ansteigt.

Die Wirkungsweise der üblichen Fließverbesserer und Paraffindispergatoren beruht auf der Modifikation der Paraffinkristalle. Es handelt sich im allgemeinen um Polymere, die durch Co-Kristallisation (Interaktion) das Kristallwachstum der n-Paraffine verändern und dadurch die Fließeigenschaften des Mitteldestillates bei niedrigen Temperaturen verbessern. Die Wirksamkeit der Fließverbesserer wird nach DIN EN 116 indirekt durch Messung des "Cold Filter Plugging Point" (CFPP) ausgedrückt.

Als Fließverbesserer werden seit langem Ethylen-Vinylcarboxylat-Copolymere eingesetzt, wie sie z.B. aus der US-A-3 048 479 und US-A-3 627 838 bekannt sind.

In der WO 95/25755 sind Fließverbesserer auf der Basis eines Copolymerisats von Diketen, ungesättigten Dicarbonsäuren und Olefinen beschrieben.

Aufgabe der Erfindung ist die Bereitstellung von Fließverbesserern und Paraffindispergatoren, die auch in sogenannten kritischen Erdölmitteldestillaten, in denen herkömmliche Fließverbesserer kein oder kein ausreichendes Ansprechverhalten zeigen, wirksam sind.

Die Aufgabe wird erfindungsgemäß gelöst durch die Bereitstellung eines Copolymerisats aus den Monomeren der nachstehenden Komponenten A bis C und gegebenenfalls D, deren Gesamtgewicht 100 Mol-% ergibt:
a: 20 bis 80 Mol-% mindestens einer ethylenisch ungesättigten Dicarbonsäure oder eines Anhydrids, Esters und/oder Amids davon als Komponente A,
b: 1 bis 79 Mol-% mindestens eines Diketens der allgemeinen Formel (I) 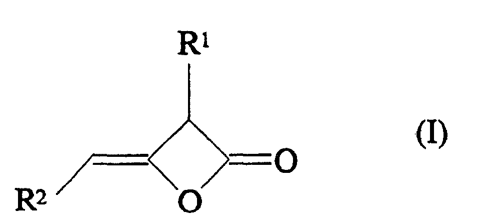 in der
   R¹ und
   R² unabhängig Wasserstoff oder C₁₋₃₀-Alkyl bedeuten, als Komponente B,
c: 1 bis 79 Mol-% mindestens eines Vinylesters, (Meth)acrylsäurealkylesters, (Meth)acrylnitril oder Gemischen davon als Komponente C,
d: 0 bis weniger als 0,5 Mol-% oder, sofern mindestens 20 Mol-% der Komponente C vorliegen, 0 bis 20 Mol-% mindestens eines weiteren olefinisch ungesättigten Monomeren als Komponente D.

Bestimmte Copolymerisate, die den erfindungsgemäßen Copolymerisaten ähneln, sind bekannt. Copolymerisate aus Maleinsäureanhydrid, Diketen und einem Vinylether sind aus der DE-A-25 31 194 bekannt. Sie werden als oberflächenaktive Verbindungen, Glasreiniger oder als Gerüststoffe für feste und flüssige synthetische Waschmittel eingesetzt.

Aus der DE-A-25 31 195 sind ähnliche Copolymerisate bekannt, die auf Maleinsäureanhydrid und Diketen sowie gegebenenfalls Vinylether basieren. Sie werden zum Antistatischmachen von organischen Fasermaterialien oder als Farbpflegemittel eingesetzt.

Aus der DE-A-39 13 127 sind Copolymerisate aus Maleinsäureanhydrid, Diketen und (Meth)acrylsäure bekannt. Sie werden als Zusatz zu pulverförmigen oder flüssigen Wasch- und Reinigungsmitteln eingesetzt.

Nachstehend werden die Komponenten der erfindungsgemäßen Copolymerisate erläutert.

### Komponente A

Komponente A wird in den erfindungsgemäßen Copolymerisaten in einer Menge von 20 bis 80 Mol-%, vorzugsweise 20 bis 70 Mol-%, insbesondere 25 bis 68 Mol-% eingesetzt.

Vorzugsweise werden als Komponente A Verbindungen der allgemeinen Formel (II)

R⁴-OC-R³C = CR⁵-CO-R⁶ (II)

eingesetzt, in der R³ und R⁵ unabhängig Wasserstoff oder C₁₋₂₂-, vorzugsweise C₁₋₁₀-, insbesondere C₁₋₆-Alkyl und
R⁴ und R⁶ unabhängig Wasserstoff oder Reste von NH-, SH- und/oder OH-funktionellen Verbindungen, insbesondere Wasserstoff, -SR⁷, -OR⁸, -NR⁹R¹⁰ oder im Falle von cis-Dicarbonsäureverbindungen R⁴ und R⁶ zusammen -O-oder -NR¹¹- und R⁷ bis R¹¹ unabhängig C₁₋₂₂-, vorzugsweise C₁₋₁₀-, insbesondere C₁₋₆-Alkyl oder -Hydroxyalkyl oder C₂₋₂₂- vorzugsweise C₂₋₁₀-, insbesondere C₂₋₆-Alkenyl, die durch bis zu 3 Sauerstoffatome unterbrochen und/oder aminoalkyliert sein können, Polyetherreste oder Polyaminreste bedeuten.

Bilden die Reste R⁴ und R⁶ zusammen einen Rest -O-, so handelt es sich um Säureanhydride.

Als Komponente A eignen sich beispielsweise monoethylenisch ungesättigte Dicarbonsäureanhydride mit 4 bis 8 C-Atomen, wie Maleinsäureanhydrid, Itaconsäureanhydrid, Mesaconsäureanhydrid, Citraconsäureanhydrid und Methylenmalonsäureanhydrid. In den genannten Anhydriden werden Maleinsäureanhydrid und Itaconsäureanhydrid bevorzugt eingesetzt, insbesondere Maleinsäureanhydrid.

Weiterhin bevorzugt sind Dicarbonsäuren, wie Fumarsäure, Maleinsäure, Itaconsäure, Mesaconsäure, Citraconsäure, Methylenmalonsäure sowie deren entsprechende Mono- und Dialkylester mit vorzugsweise C₁₋₁₂-Alkoholen, insbesondere aliphatischen linearen C₁₋₆-Alkoholen.

Die NH- und/oder OH-funktionelle Verbindung kann die allgemeine Formel (IV) haben

A-[CHR¹⁴-CHR¹⁵-O]ₘ [CHR¹⁶-(CH₂-)ₓNH-]ₙH (IV)

in der m eine Zahl im Bereich von 0 bis 100, vorzugsweise 0 bis 50, insbesondere 0 bis 20,
n eine Zahl im Bereich von 0 bis 5,
x eine Zahl im Bereich von 0 bis 5,

R¹⁴, R¹⁵, R¹⁶ unabhängig Wasserstoff oder C₁₋₆-Alkyl und
A C₂₋₃₀-, vorzugsweise C₂₋₂₀-, insbesondere C₂₋₁₀, speziell C₂₋₆-Alkoxy oder NR¹⁷R¹⁸ bedeuten, wobei einer der Reste R¹⁷, R¹⁸ Wasserstoff sein kann und mindestens einer der Reste R¹⁷, R¹⁸ von Wasserstoff verschieden und C₁₋₃₀-, vorzugsweise C₁₋₂₀-, insbesondere C₁₋₆-Alkyl oder C₂₋₃₀-, vorzugsweise C₂₋₂₀-, insbesondere C₂₋₆-Alkenyl oder -[CHR¹⁹-CHR²⁰-O-]ₚH ist, wobei R¹⁹, R²⁰ unabhängig Wasserstoff oder C₁₋₆-Alkyl und p eine Zahl von 1 bis 100, vorzugsweise 1 bis 50, insbesondere 1 bis 20 bedeuten.

Die Werte von m, n und p können dabei auch Mittelwerte darstellen, sofern eine Verteilung des Anteils dieser Bausteine vorliegt.

Die Verbindung der allgemeinen Formel (IV) ist vorzugsweise über die Bindung umgesetzt, die zum rechts stehenden Wasserstoffatom führt.

### Komponente B

Die erfindungsgemäßen Copolymerisate enthalten 1 bis 79, vorzugsweise 10 bis 60, insbesondere 10 bis 53 Mol-% der Komponente B. In den Verbindungen der allgemeinen Formel (I) sind R¹ und R² unabhängig voneinander Wasserstoff oder C₁₋₃₀-, vorzugsweise C₁₋₂₀-, besonders bevorzugt C₁₋₁₀-, speziell C₁₋₆-Alkyl. Ein Beispiel für ein substituiertes Diketen ist das unter der Bezeichnung Basoplast® von der BASF vertriebene Distearyldiketen, in dem R¹ und R² jeweils 14 bis 16 C-Atome aufweisen. Vorzugsweise wird das unsubstituierte Diketen (R¹ und R²=H) eingesetzt.

### Komponente C

Die erfindungsgemäßen Copolymerisate enthalten 1 bis 79, vorzugsweise 20 bis 70, insbesondere 22 bis 65 Mol-% der Komponente C. Vorzugsweise werden als Komponente C Vinylester von aliphatischen C₁₋₆-Carbonsäuren, (Meth)acrylsäurealkylester mit aliphatischen C₁₋₁₂, vorzugsweise C₁₋₆-Alkoholen, (Meth)acrylnitril oder Gemische davon eingesetzt. Besonders bevorzugt werden Vinylester aliphatischer C₁₋₅-Carbonsäuren und/oder (Meth)acrylnitril eingesetzt. Insbesondere werden Vinylacetat und/oder Vinylpropionat eingesetzt.

### Komponente D

Die erfindungsgemäßen Copolymerisate enthalten 0 bis weniger als 0,5 Mol-% oder, sofern mindestens 20 Mol-% der Komponente C vorliegen, 0 bis 20, vorzugsweise 0 bis 10, insbesondere 0 bis 5 Mol-% mindestens eines weiteren olefinisch ungesättigten Monomeren. Besonders bevorzugt liegt keine Komponente D vor. Wird eine zusätzliche Komponente D verwendet, so handelt es sich vorzugsweise um mindestens eine Verbindung der allgemeinen Formel (III)

H₂C=CR¹²R¹³ (III)

in der R¹² Wasserstoff oder C₁₋₁₂-, vorzugsweise C₁₋₆-Alkyl und R¹³ Wasserstoff, C₁₋₁₂-, vorzugsweise C₁₋₆-Alkyl, C₂₋₁₂-, vorzugsweise C₂₋₆-Alkenyl oder C₆₋₁₂-Aryl, vorzugsweise Phenyl bedeuten.

Um eine möglichst vorteilhafte Wirkung der erfindungsgemäßen Copolymerisate als Fließverbesserer zu erhalten, sollte der Anteil der Komponente D klein gehalten werden. Insbesondere wird keine Komponente D verwendet.

Besonders bevorzugt werden Monomerkombinationen aus Maleinsäureanhydrid, Diketen und Vinylacetat oder Vinylpropionat eingesetzt. Ferner werden bevorzugt Monomergemische aus C_{12/14}- und/oder C_{16/18}- und/oder C_{18/22}-Dialkylfumarsäureester, Diketen und Vinylacetat oder Vinylpropionat eingesetzt.

### Herstellung der Copolymerisate

Zur Herstellung der Copolymerisate werden die Monomere der Komponenten A bis C und gegebenenfalls D im vorstehend angegebenen Mengenverhältnis in Gegenwart eines Radikale bildenden Polymerisationsinitiators umgesetzt.

Es kann auch in einem ersten Schritt die Copolymerisation der Monomere so durchgeführt werden, daß als Komponente A mindestens eine ethylenische ungesättigte Carbonsäure oder ein Anhydrid oder Ester davon eingesetzt wird und in einem zweiten Schritt das erhaltene Copolymerisat mit einer OHund/oder NH-funktionellen Verbindung umgesetzt wird, wie sie vorstehend in der allgemeinen Formel (IV) beschrieben ist.

Die Polymerisation der Komponenten A, B, C und gegebenenfalls D erfolgt im allgemeinen in an sich bekannter Weise in inerten organischen Lösemitteln unter radikalischen Bedingungen (vgl. DE-A-23 42 300 beziehungsweise DE-A-25 31 135). Geeignet sind insbesondere Lösemittel, welche praktisch nicht in die Polymerisation eingreifen und nicht mit den Monomeren reagieren. Solche Lösemittel, die alleine oder in Mischung verwendet werden können, sind beispielsweise Aceton, Methylethylketon, Diethylketon, Cyclohexanon, Tetrahydrofuran, Dioxan, Ethylacetat, Propionsäureethylester, aromatische Kohlenwasserstoffe, wie Benzol, Toluol, Xylol, Cumol, Tetralin, Solvent Naphtha (z.B. Solvesso® 150), aliphatische Kohlenwasserstoffe wie Pentan, Hexan, Heptan, Octan, Isooctan, Cyclohexan, Decalin, Shellsol® D 70, halogenierte, aliphatische Kohlenwasserstoffe, wie Dichlormethan, Dichlorethan, Trichlorethan.

Solvesso® 150 ist die Bezeichnung der Exxon Chemical GmbH für eine aromatische Lösemittelfraktion vom Siedeintervall 187 bis 203°C. Es enthält etwa 99 % Aromaten. Shellsol® D 70 ist die Bezeichnung der Shell für ein entaromatisiertes, aliphatisches Kohlenwasserstoffgemisch vom Siedeintervall 195 bis 245°C.

Vorzugsweise verwendet man als Lösemittel Aceton, Methylethylketon, Toluol, Xylol, Tetralin, Dekalin, Solvent Naphta (wie Solvesso® 150) oder Shellsol® D 70.

Die Copolymerisation der Komponenten A, B, C und gegebenenfalls D erfolgt in der Regel in Gegenwart von Verbindungen, die unter den Polymerisationsbedingungen in Radikale zerfallen. Geeignete derartige Polymerisationsinitiatoren sind beispielsweise Wasserstoffperoxid, organische Peroxide und Hydroperoxide, Azoverbindungen und Peroxodisulfate. Die Polymerisation kann auch durch Einwirkung energiereicher Strahlung oder durch Bestrahlung des Reaktionsgemisches in Gegenwart eines Photoinitiators, wie Benzoin, vorgenommen werden.

Die Initiatoren sollen vorzugsweise bei den gewählten Polymerisationstemperaturen eine Halbwertzeit von < 10 Stunden besitzen. Vorzugsweise werden als Polymerisationsinitiatoren tert.-Butylperpivalat, Dilaurylperoxid, tert.-Butylper-2-ethylhexanoat (Butylperoctanoat), tert.-Butylperbenzoat, Dicumylperoxid, Di-tert.-butylperoxid, 2,2'-Azobis(2-methylpropionitril) oder deren Gemische eingesetzt. Durch die Mitverwendung von Redox-Coinitiatoren, wie Benzoin oder Dimethylanilin sowie von organischen löslichen Komplexen oder Salzen von Schwermetallen, wie Kupfer, Kobalt, Mangan, Eisen, Nickel oder Chrom können die Halbwertszeiten der genannten Peroxide verringert werden.

Die in Radikale zerfallenden Polymerisationsinitiatoren werden in üblichen Mengen eingesetzt, wie 0,1 bis 5,0 Mol-%, bezogen auf das Gesamtgewicht der bei der Polymerisation verwendeten Monomeren.

Die Polymerisation kann gegebenenfalls in Gegenwart von üblichen Reglern, wie Mercaptoethanol, Mercaptopropanol, Mercaptoessigsäure, Mercaptopropionsäure, Thiomilchsäure, n-Butylmercaptan, tert.-Butylmercaptan, Octylmercaptan und Dodecylmercaptan durchgeführt werden. Weitere geeignete Regler sind Aldehyde, wie Acetaldehyd, Propionaldehyd, Butyraldehyd, Ameisensäure und Buten-1-ol.

Die Polymerisation wird vorzugsweise in Rührkesseln durchgeführt, die beispielsweise mit einem Anker-, Blatt- oder Impellerrührer ausgestattet sind. Die Copolymerisation kann beispielsweise als Lösungs-, Fällungs- oder Suspensionspolymerisation durchgeführt werden.

Bei der Fällungs- und Suspensionspolymerisation kann es vorteilhaft sein, zusätzlich in Gegenwart von Schutzkolloiden zu polymerisieren. Geeignete Schutzkolloide sind beispielsweise Copolymerisate aus Maleinsäureanhydrid und Vinylalkylethern, die 1 bis 20 Kohlenstoffatome in dem Alkylrest tragen, oder Copolymerisate aus Maleinsäureanhydrid, deren Monoestern mit C₁₀₋₃₀-Alkoholen oder Monoamiden mit C₁₀₋₂₀-Aminen und Olefinen mit 8 bis 30 Kohlenstoffatomen. Außerdem eignen sich Polyalkylvinylether, deren Alkylgruppe 1 bis 20 Kohlenstoffatome enthält, wie Polymethyl-, Polyethylund Polyisobutylvinylether. Falls bei der Copolymerisation ein Schutzkolloid eingesetzt wird, so betragen die wirksamen Mengen 0,05 bis 4,0 Mol-%, bezogen auf die zu polymerisierenden Monomeren A, B, C, und gegebenenfalls D.

Die Konzentration der Monomeren in den inerten organischen Lösungen beträgt im allgemeinen 5 bis 80, vorzugsweise 15 bis 60 Mol-%. Die Polymerisationstemperatur liegt in der Regel im Bereich von 40 bis 160°C, vorzugsweise 50 bis 150°C.

Nach Beendigung der Polymerisation können die Copolymerisate isoliert werden, beispielsweise durch Abdestillieren des bei der Polymerisation verwendeten Lösemittels oder durch Ausfällen der Copolymerisate mit einem geeigneten Lösemittel. Die Copolymerisate verbleiben dann als pulverförmiger Rückstand.

Das mittlere Molekulargewicht (Gewichtsmittel) der erfindungsgemäßen Copolymerisate beträgt im allgemeinen 300 bis 50000, vorzugsweise 600 bis 20000.

### Modifizierung der Copolymerisate

Die Copolymerisate können als solche in Erdölmitteldestillaten eingesetzt oder zunächst ganz oder teilweise durch polymeranaloge Umsetzungen modifiziert werden.

Die erfindungsgemäßen Copolymerisate enthalten als reaktionsfähige Gruppen insbesondere Carboxyl-, Anhydrid-, Ester-, und 4-Ring-Lacton-Struktureinheiten. Vorteilhaft sind neben der einfachen Hydrolyse mit Wasser auch Umsetzungen mit NH-, SH-, und OH-funktionellen Verbindungen möglich. Neben der direkten Veresterung von Carbonsäure-, Anhydrid- oder Lactoneinheiten ist hier auch die Umesterung von Carbonsäureestereinheiten auf Basis niederer Alkohole mit längerkettigen Alkoholen möglich.

Geeignete Reaktionspartner sind beispielsweise solche der vorstehenden Formel (IV), wie auch Alkohole, Phenole, Mercaptane, Oxime, Imine, primäre und sekundäre Amine. Die Umsetzung der Copolymerisate kann hierbei in dem organischen Lösemittel erfolgen, in dem auch die Copolymerisation vorgenommen wurde, oder man destilliert die verwendeten Lösemittel zunächst ab und führt dann die entsprechenden Umsetzungen durch.

Als Alkohole können insbesondere verzweigte oder geradkettige C₁₋₃₀-Alkylalkohole oder Alkenylalkohole, vorzugsweise C₁₀₋₃₀-Alkyl- oder Alkenylalkohole eingesetzt werden, wie Decanol, Dodecanol, i-Tridecanol, Tetradecanol, Stearylalkohol, Talgfettalkohol, Behenylalkohol.

Es können auch Alkoxilate von Alkoholen, Aminen, Amiden oder Carbonsäuren eingesetzt werden, wie Alkoxilierungsprodukte von Distearylamin, Oleylamin, Dikokosfettamin, Aminopropylstearylamin, Ditalgfettamin, hydriertem Ditalgfettamin, Stearylalkohol, i-Tridecanol, i-Tridecylamin, Behenylalkohol.

Als Amine können primäre oder sekundäre C₁₋₁₀, vorzugsweise C₁₋₆-Alkylamine, Polyetheramine oder Polyamine eingesetzt werden.

Als Beispiel für primäre oder sekundäre Amine seien i-Tridecylamin, Stearylamin, Kokosfettamin, Distearylamin, Ditalgfettamin, Dioleylamin, Dikokosfettamin genannt. Es können auch Polyamine eingesetzt werden, wie Aminopropylstearylamin, Aminopropyllaurylamin, N,N-Dimethylpropylendiamin, N,N-Dimethyldipropylentriamin. Als Aminkomponente können auch aminopropylierte Alkohole, aminierte Alkoxilate oder aminopropylierte Alkoxilate eingesetzt werden, wie Aminopropylstearylalkohol, Aminopropylethoxistearylamin, Fettalkylpolyethylenglykolamin (wie aminierte Lutensol®-Marken der BASF Aktiengesellschaft).

Die Umsetzung der erfindungsgemäßen Copolymerisate mit Alkoholen und /oder Aminen oder deren Derivaten erfolgt in Substanz oder in solchen Lösemitteln, die im allgemeinen selbst keine aciden Wasserstoffatome enthalten. Es können die gleichen Lösemittel wie bei der Polymerisation eingesetzt werden. Die Reaktion muß nicht vollständig ablaufen. Die während der Umsetzung gebildeten Amid-, Imid- und Ester-Gruppen sowie die Abnahme des 4-Ringlactons und gegebenenfalls Carbonsäureanhydrideinheiten können IR-spektroskopisch verfolgt werden. Für den Fall, daß die erfindungsgemäßen Copolymerisate Carboxyl- oder Anhydrid-Funktionen enthalten, kann gleichzeitig eine Abnahme der Säurezahl [mg KOH/g] beobachtet werden.

Die Alkohol- oder Aminkomponente wird bezogen auf ihre umsetzbaren OHoder NH-Äquivalente üblicherweise in Mengen von 0,1 bis 3 Äquivalenten pro Äquivalent an Carbonsäuregruppen in der einpolymerisierten Dicarbonsäure- beziehungsweise Dicarbonsäurederivat-Menge und/oder einpolymerisierten Lacton-Einheiten eingesetzt. Bevorzugt sind Mengen von 0,5 bis 2 Äquivalenten NH- oder OH-Funktionen pro reaktivem Zentrum im erfindungsgemäßen Copolymer.

Als besonders vorteilhafte geeignete Fließverbesserer für Mitteldestillate haben sich vor allem Copolymerisate auf Basis von ethylenisch ungesättigten Dicarbonsäureestern, Diketen und Vinylestern oder entsprechende Umsetzungsprodukte der resultierenden erfindungsgemäßen Polymeren mit n-Alkylalkoholen, wie Dodecanol, Tetradecanol, Stearylalkohol, Behenylalkohol oder Mischungen aus Alkoholen unterschiedlicher Alkylkettenlänge sowie mit primären und sekundären Alkyl- oder Alkylenaminen erwiesen.

Die erfindungsgemäßen, gegebenenfalls modifizierten Copolymerisate finden Verwendung als Zusatz für Erdölmitteldestillate, worunter Petroleum, leichtes Heizöl und Dieselkraftstoffe mit einer Siedetemperatur von etwa 150 bis 400°C verstanden werden. Die Copolymerisate können den Mitteldestillaten direkt, bevorzugt aber als 20 bis 70 Mol-%ige Lösung zugesetzt werden. Geeignete Lösemittel sind aliphatische oder aromatische Lösemittel wie Toluol, Xylol, Dekalin oder deren Gemische, weiterhin hochsiedende Aromaten- und/oder Aliphatengemische, sowie Erdölmitteldestillate. Die Menge an Copolymerisaten in den Erdölmitteldestillaten beträgt in der Regel 10 bis 10000, vorzugsweise 20 bis 5000 und besonders bevorzugt 50 bis 1000 ppm.

Je nach Verwendungszweck können die Erdölmitteldestillate noch weitere Additive, wie Fließverbesserer, Paraffindispergatoren, Anti-Schaum-Mittel, Korrosionsschutzmittel, Antioxidantien, Emulgatoren, Schmierfähigkeitsverbesserer (Lubricity-Additive), Detergents, Cetanzahlverbesserer, Leitfähigkeitsverbesserer und/oder Farbstoffe enthalten.

Oft werden in Erdölmitteldestillaten Kombinationen von verschiedenen Fließverbesserern, und/oder Paraffindispergatoren eingesetzt. Geeignete Cowirkstoffe sind beispielsweise Ethylen-Vinylester-Copolymerisate, wie sie in der DE-A-19 14 756 und EP-A-0 486 836 beschrieben sind und/oder α-Olefin-Maleinsäureester-Copolymerisate (EP-A-0-214 876) und/oder Alkylfumarat-Vinylacetat-Copolymere (EP-B-0 153 176).

Es kommen jedoch als Cowirkstoffe auch gleichermaßen Copolymerisate in Betracht, die neben Ethylen, Vinylestern und/oder ungesättigten Monound/oder Dicarbonsäureestern noch weitere Comonomere enthalten. Das Molekulargewicht (M_{w}) dieser Fließverbesserer beträgt in der Regel 500 bis 50 000, vorzugsweise 1000 bis 20 000.

Die erfindungsgemäßen Copolymerisate bewirken in Kombination mit üblichen Fließverbesserern auf Basis von Ethylen-Vinylcarboxilat-Copolymeren in Erdölmitteldestillaten unabhängig von deren Herkunft eine deutliche Verbesserung der Fließeigenschaften in der Kälte, indem sie die Kristallform und -größe derart modifizieren, daß es nicht zu Verstopfungen von Filtern und Leitungen durch Paraffinkristalle kommt.

Es wurde gefunden, daß insbesondere in kritischen Mitteldestillaten in denen übliche Fließverbesserer allein keine ausreichende Wirksamkeit zeigen, ein Zusatz der erfindungsgemäßen Copolymerisate in Kombination mit üblichen Fließverbesserern auf Basis von Ethylen-Vinylcarboxilat-Copolymeren zu einem deutlich verbesserten Kältefließverhalten (CFPP-Absenkung) des Mitteldestillates führt.

Die Erfindung betrifft somit auch ein Gemisch aus 5 bis 95 Gew.-% mindestens eines Copolymerisats, wie es vorstehend beschrieben ist, und 5 bis 95 Gew.-% mindestens eines Ethylen-Vinylcarboxilat-Copolymerisats. Dabei kann das Gemisch gegebenenfalls in einem Lösemittel, wie es vorstehend aufgeführt ist gelöst sein. Sowohl die Copolymerisate als auch die Gemische können, gegebenenfalls als 20 bis 70 Mol-%ige Lösung in einem Lösemittel als Zusatz für Erdölmitteldestillate, insbesondere als Fließverbesserer oder Paraffindispergatoren verwendet werden.

Die Erfindung betrifft auch ein entsprechendes Konzentrat, enthaltend 20 bis 70 Gew.-% mindestens eines Copolymerisats, wie es vorstehend beschrieben ist, und/oder eines Gemisches wie es vorstehend beschrieben ist, gelöst in einem Lösemittel.

Zudem betrifft die Erfindung ein Erdölmitteldestillat, enthaltend mindestens ein Copolymerisat, wie es vorstehend beschrieben ist, und/oder ein Gemisch, wie es vorstehend beschrieben ist, und/oder ein Konzentrat, wie es vorstehend beschrieben ist.

Die Erfindung wird nachstehend durch Beispiele näher erläutert:

### Beispiele

Die Prozentangaben in den Beispielen beziehen sich jeweils auf das Gewicht. Die K-Werte wurden nach H. Fikentscher, Cellulosechemie, Band 13, Seiten 58 bis 64 und 71 bis 74 (1932) bestimmt.

### A: Herstellung der Copolymerisate

Zur Herstellung der Copolymerisate wurde ein Reaktor aus Glas, der mit einem Rührer und drei Zuläufen versehen war, verwendet. Während der Polymerisation wurde ein schwacher Stickstoffstrom durch die Reaktionslösung geleitet. Die IR-Spektren der Copolymerisate weisen eine charakteristische Bande bei 1840 cm⁻¹ (4-Ring-Lacton) und im Fall der dicarbonsäureanhydridhaltigen Copolymere eine zusätzliche Bande bei 1780 cm⁻¹ (Anhydrid) auf.

### Beispiel A1

Im Reaktor wurden 49,0 g Maleinsäureanhydrid, 0,7 g eines Polyvinylethylethers mit einem K-Wert von 60 (1 %ig in THF) und 47 g Solvesso® 150 der Esso vorgelegt und unter Stickstoffspülung auf 100°C aufgeheizt. Anschließend wurden innerhalb von 3 Stunden 8,4 g Diketen gelöst in 34 g Solvesso® 150 und parallel hierzu 34,4 g Vinylacetat gleichmäßig zudosiert. Gleichzeitig wurde innerhalb von 4,5 Stunden eine Lösung von 2,3 g tert.-Butyl-per-2-ethylhexanoat in 20 g Solvesso® 150 zugefügt. Nach beendeter Initiatorzugabe wurde das Reaktionsgemisch noch 1,5 Stunden bei 100°C auspolymerisiert. Man erhielt eine gelbe feinteilige viskose Suspension mit einem Feststoffgehalt von 48,9 %.

### Beispiel A2

Im Reaktor wurden 49,0 g Maleinsäureanhydrid, 0,7 g eines Polyvinylethylethers mit einem K-Wert von 60 (1 %ig in THF) und 40 g Solvesso® 150 vorgelegt und unter Stickstoffspülung auf 100°C aufgeheitzt. Anschließend wurden innerhalb von 3 Stunden 12,6 g Diketen gelöst in 50 g Solvesso® 150 und parallel hierzu 30,1 g Vinylacetat gleichmäßig zudosiert. Gleichzeitig wurde innerhalb von 4,5 Stunden eine Lösung von 2,3 g tert.-Butyl-2-per-ethylhexanoat in 20 g Solvesso® 150 zugefügt. Nach beendeter Initiatorzugabe wurde das Reaktionsgemisch noch 1,5 Stunden bei 100°C auspolymerisiert und mit 50 g Solvesso® 150 verdünnt. Man erhielt eine gelbe feinteilige viskose Suspension mit einem Feststoffgehalt von 38,8 %.

### Beispiel A3

Im Reaktor wurden 49,0 g Maleinsäureanhydrid, 0,7 g eines Polyvinylethylethers mit einem K-Wert von 60 (1 %ig in THF) und 47 g Solvesso® 150 vorgelegt und unter Stickstoffspülung auf 100°C aufgeheitzt. Anschließend wurden innerhalb von 3 Stunden 8,4 g Diketen gelöst in 34 g Solvesso® 150 und parallel hierzu 40,0 g Vinylpropionat gleichmäßig zudosiert. Gleichzeitig wurde innerhalb von 4,5 Stunden eine Lösung von 2,45 g tert.-Butyl-2-perethylhexanoat in 25 g Solvesso® 150 zugefügt. Nach beendeter Initiatorzugabe wurde das Reaktionsgemisch noch 1,5 Stunden bei 100°C auspolymerisiert und mit 50 g Solvesso® 150 verdünnt. Man erhielt eine gelbe feinteilige viskose Suspension mit einem Feststoffgehalt von 47,6 %.

### Beispiel A4

Im Reaktor wurden 49,0 g Maleinsäureanhydrid, 0,7 g eines Polyvinylethylethers mit einem K-Wert von 60 (1 %ig in THF) und 35 g Solvesso® 150 vorgelegt und unter Stickstoffspülung auf 100°C aufgeheitzt. Anschließend wurden innerhalb von 3 Stunden 12,6 g Diketen gelöst in 50 g Solvesso® 150 und parallel hierzu 35,0 g Vinylpropionat gleichmäßig zudosiert. Gleichzeitig wurde innerhalb von 4,5 Stunden eine Lösung von 2,45 g tert.-Butyl-per-2-ethylhexanoat in 20 g Solvesso® 150 zugefügt. Nach beendeter Initiatorzu-gabe wurde das Reaktionsgemisch noch 1,5 Stunden bei 100°C auspolymerisiert und mit 50 g Solvesso® 150 verdünnt. Man erhielt eine gelbe feinteilige viskose Suspension mit einem Feststoffgehalt von 47,8 %.

### Beispiel A5

Im Reaktor wurden 80,4 g Maleinsäureanhydrid, 1,12 g eines Polyvinylethylethers mit einem K-Wert von 60 (1 %ig in THF) und 80 g Solvesso® 150 vorgelegt und unter Stickstoffspülung auf 100°C aufgeheitzt. Anschließend wurden innerhalb von 3 Stunden 34,4 g Diketen gelöst in 138 g Solvesso® 150 und parallel hierzu 35,3 g Vinylacetat gleichmäßig zudosiert. Gleichzeitig wurde innerhalb von 4,5 Stunden eine Lösung von 7,5 g tert.-Butyl-per-2-ethylhexanoat in 36 g Solvesso® 150 zugefügt. Nach beendeter Initiatorzugabe wurde das Reaktionsgemisch noch 1,5 Stunden bei 100°C auspolymerisiert und mit 30 g Solvesso® 150 verdünnt. Man erhielt eine gelbe feinteilige viskose Suspension mit einem Feststoffgehalt von 33,9 %.

### Beispiel A6

Im Reaktor wurden 80,9 g Maleinsäureanhydrid, 1,12 g eines Polyvinylethylethers mit einem K-Wert von 60 (1 %ig THF) und 80 g Solvesso® 150 vorgelegt und unter Stickstoffspülung auf 100°C aufgeheitzt. Anschließend wurden innerhalb von 3 Stunden 48,5 g Diketen gelöst in 194 g Solvesso® 150 und parallel hierzu 21,3 g Vinylacetat gleichmäßig zudosiert. Gleichzeitig wurde innerhalb von 4,5 Stunden eine Lösung von 7,5 g tert.-Butyl-2-per-ethylhexanoat in 36 g Solvesso® 150 zugefügt. Nach beendeter Initiatorzugabe wurde das Reaktionsgemisch noch 1,5 Stunden bei 100°C auspolymerisiert und mit 30 g Solvesso® 150 verdünnt. Man erhielt eine gelbe feinteilige viskose Suspension mit einem Feststoffgehalt von 29,1 %.

### Beispiel A7

Im Reaktor wurden 96,2 g eines Dialkylfumarsäureesters, hergestellt aus Fumarsäure und einem C_{12/14}-Fettalkoholschnitt (Nafol® 1412H; Handelsprodukt der Fa. Condea), und 20,2 g Xylol vorgelegt. Die Vorlage wurde unter Stickstoffspülung auf 105°C geheizt und dann wurden innerhalb von drei Stunden 1,7 g Diketen gelöst in 6,7 g Toluol und parallel hierzu 15,5 g Vinylacetat zudosiert. Gleichzeitig wurde innerhalb von 4 Stunden eine Lösung von 5,7 g tert.-Butyl-per-2-ethylhexanoat in 15 g Toluol zugefügt. Nach beendeter Initiatorzugabe wurde das Reaktionsgemisch noch 1 Stunde bei 105°C auspolymerisiert. Man erhielt eine gelbe, leicht viskose Lösung mit einem Feststoffgehalt von 71,7 %.

### Beispiel A8

Im Reaktor wurden 80,7 g eines Dialkylfumarsäureesters, hergestellt aus Fumarsäure und einem C_{12/14}-Fettalkoholschnitt (Nafol® 1412H; Handelsprodukt der Fa. Condea), und 16,9 g Xylol vorgelegt. Die Vorlage wurde unter Stickstoffspülung auf 105°C geheizt und dann wurden innerhalb von drei Stunden 7,0 g Diketen gelöst in 7,0 g Toluol und parallel hierzu 7,2 g Vinylacetat gelöst in 7,2 g Toluol zudosiert. Gleichzeitig wurde innerhalb von 4 Stunden eine Lösung von 4,7 g tert.-Butyl-2-per-ethylhexanoat in 15 g Toluol zugefügt. Nach beendeter Initiatorzugabe wurde das Reaktionsgemisch noch 1 Stunde bei 105°C auspolymerisiert. Man erhielt eine gelbe, leicht viskose Lösung mit einem Feststoffgehalt von 64,5 %.

### Beipsiel A9

Im Reaktor wurden 69,1 g eines Dialkylfumarsäureesters, hergestellt aus Fumarsäure und einem C_{12/14}-Fettalkoholschnitt (Nafol® 1412H; Handelsprodukt der Fa. Condea), und 14,5 g Xylol vorgelegt. Die Vorlage wurde unter Stickstoffspülung auf 105°C geheizt und dann innerhalb von drei Stunden 11,0 g Diketen gelöst in 12,0 g Toluol und parallel hierzu 1,0 g Vinylacetat zudosiert. Gleichzeitig wurde innerhalb von 4 Stunden eine Lösung von 4,05 g tert.-Butyl-2-per-ethylhexanoat in 16 g Toluol zugefügt. Nach beendeter Initiatorzugabe wurde das Reaktionsgemisch noch 1 Stunde bei 105°C auspolymerisiert. Man erhielt eine gelbe, leicht viskose Lösung mit einem Feststoffgehalt von 62,1 %.

### Beispiel A10

Im Reaktor wurden 84,0 g eines Dialkylfumarsäureesters, hergestellt aus Fumarsäure und einem C₁₂ - C₁₆-Fettalkoholschnitt (Mischung aus 75 Gew.-% Nafol® 1412H; Handelsprodukt der Fa. Condea und 25 Gew.-% Lorol® C-16; Handelsprodukt der Fa. Henkel), und 20,0 g Solvesso® 150 vorgelegt. Die Vorlage wurde unter Stickstoffspülung auf 105°C geheizt und dann wurden innerhalb von drei Stunden 1,4 g Diketen gelöst in 5,0 g Solvesso® 150 und parallel hierzu 12,9 g Vinylacetat gelöst in 7,1 g Solvesso® 150 zudosiert. Gleichzeitig wurde innerhalb von 4 Stunden eine Lösung von 4,9 g tert.-Butyl-2-per-ethylhexanoat in 15,1 g Solvesso® 150 zugefügt. Nach beendeter Initiatorzugabe wurde das Reaktionsgemisch noch 1 Stunde bei 105°C auspolymerisiert. Man erhielt eine bräunlich-gelbe, leicht viskose Lösung mit einem Feststoffgehalt von 62,7 %.

### Beispiel A11

Im Reaktor wurden 84,3 g eines Dialkylfumarsäureesters, hergestellt aus Fumarsäure und einem C₁₂ - C₁₆-Fettalkoholschnitt (Mischung aus 75 Gew.-% Nafol® 1412H; Handelsprodukt der Fa. Condea und 25 Gew.-% Lorol® C-16; Handelsprodukt der Fa. Henkel), und 20,0 g Solvesso® 150 vorgelegt. Die Vorlage wurde unter Stickstoffspülung auf 105°C geheizt und dann wurden innerhalb von drei Stunden 7,0 g Diketen gelöst in 7,0 g Solvesso® 150 und parallel hierzu 7,2 g Vinylacetat gelöst in 7,2 g Solvesso® 150 zudosiert. Gleichzeitig wurde innerhalb von 4 Stunden eine Lösung von 4,9 g tert.-Butyl-2-per-ethylhexanoat in 15,0 g Solvesso® 150 zugefügt. Nach beendeter Initiatorzugabe wurde das Reaktionsgemisch noch 1 Stunde bei 105°C auspolymerisiert. Man erhielt eine bräunlich-gelbe, leicht viskose Lösung mit einem Feststoffgehalt von 62,0 %.

### Beispiel A12

Im Reaktor wurden 84,0 g eines Dialkylfumarsäureesters, hergestellt aus Fumarsäure und einem C₁₂ - C₁₆-Fettalkoholschnitt (Mischung aus 75 Gew.-% Nafol® 1412H; Handelsprodukt der Fa. Condea und 25 Gew.-% Lorol® C-16; Handelsprodukt der Fa. Henkel), und 20,0 g Solvesso® 150 vorgelegt. Die Vorlage wurde unter Stickstoffspülung auf 105°C geheizt und dann wurden innerhalb von drei Stunden 13,0 g Diketen gelöst in 14,0 g Solvesso® 150 und parallel hierzu 1,0 g Vinylacetat zudosiert. Gleichzeitig wurde innerhalb von 4 Stunden eine Lösung von 4,9 g tert.-Butyl-2-per-ethylhexanoat in 15,1 g Solvesso® 150 zugefüht. Nach beendeter Initiatorzugabe wurde das Reaktionsgemisch noch 1 Stunde bei 105°C auspolymerisiert. Man erhielt eine bräunlich-gelbe, leicht viskose Lösung mit einem Feststoffgehalt von 62,0 %.

### B: Umsetzung der Polymere aus Beispielen A1 bis A6 mit Fettalkoholen

### Allgemeine Vorschrift:

Die in nachfolgender Tabelle 1 angegebene Menge einer Polymerlösung aus Beispielen A1) bis A6) wurde mit der entsprechenden Menge des jeweiligen Fettalkohols beziehungsweise der Fettalkoholmischung und der angegebenen Menge p-Toluolsulfonsäure (p-TSS) versetzt und auf ca. 150°C erhitzt. Die Reaktionslösung wurde bei dieser Temperatur ca. 10 Stunden gerührt und das anfallende Reaktionswasser ausgekreist. Das Reaktionsende konnte IR-spektroskopisch verfolgt werden. Die Carbonylschwingung des 4-Ring-Lactons beziehungsweise der Carbonsäureanhydrid-Gruppierung bei 1840 cm⁻¹ nahmen zugunsten einer Esterbande bei 1730 cm⁻¹ ab.

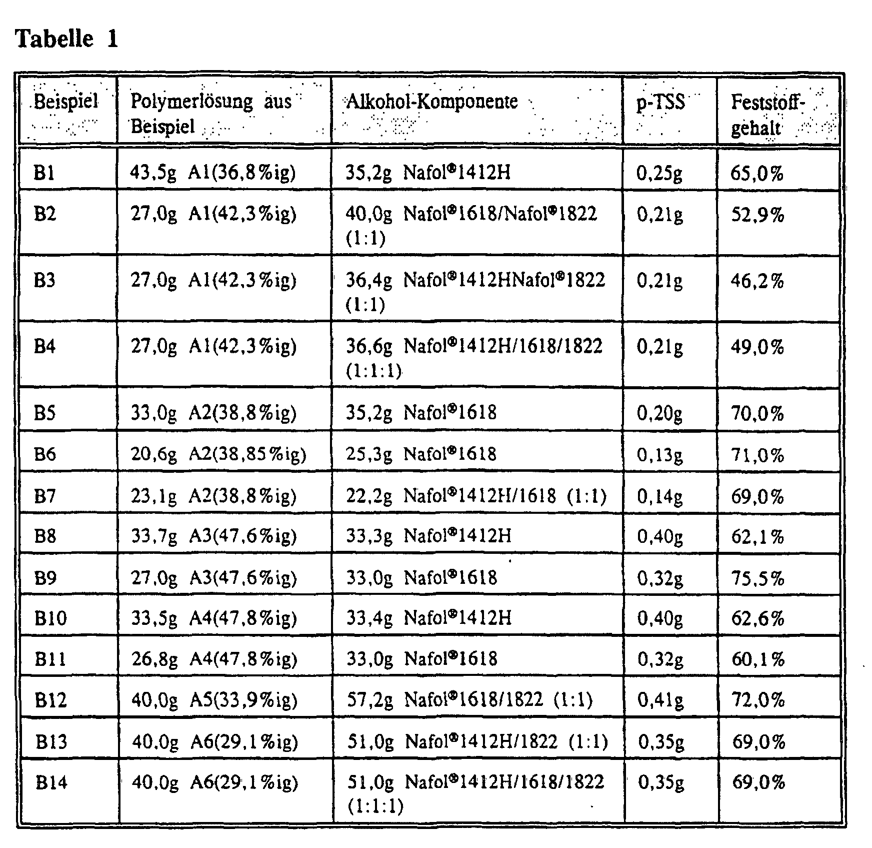

### C: Umsetzung der Polymere aus Beispielen A5 und A6 mit Aminen

### Beispiel C1

29,0 g Polymerlösung aus Beispiel A5 (34,5%ig) wurden mit 27,0 g Solvesso® 150 verdünnt und mit 38,5 g N,N-Ditalgfettamin (hydriert; Armeen® 2HT, Handelsprodukt der Fa. Akzo) versetzt. Anschließend wurde die Reaktionslösung etwa 5 Stunden bei 100°C gerührt. Das Reaktionsende konnte IR-spektroskopisch verfolgt werden. Die Carbonylschwingung des 4-Ring-Lactons beziehungsweise der Carbonsäureanhydrid-Gruppierung bei 1840 cm⁻¹ nahmen zugunsten einer Amidbande bei 1650 beziehungsweise 1680 cm⁻¹ ab. Gleichzeitig wurde eine Abnahme der Säurezahl beobachtet. Man erhielt eine rotbraune klare Lösung mit einem Feststoffgehalt von 51,0 %.

### Beispiel C2

22,9 g Polymerlösung aus Beispiel A6 (30,5%ig) wurden mit 21,0 g Solvesso® 150 verdünnt und mit 30,3 g N,N-Ditalgfettamin (hydriert; Armeen® 2HT, Handelsprodukt der Fa. Akzo) versetzt. Anschließend wurde die Reaktionslösung etwa 5 Stunden bei 100°C gerührt. Das Reaktionsende konnte IR-spektroskopisch verfolgt werden. Die Carbonylschwingung des 4-Ring-Lactons beziehungsweise der Carbonsäureanhydrid-Gruppierung bei 1840 cm⁻¹ nahmen zugunsten einer Amidbande bei 1650 beziehungsweise 1680 cm⁻¹ ab. Gleichzeitig wurde eine Abnahme der Säurezahl beobachtet. Man erhielt eine rotbraune klare Lösung mit einem Feststoffgehalt von 49,6 %.

### Anwendungstechnische Prüfung der Erdölmitteldestillatzusammensetzungen

Die erfindungsgemäßen Mischungen wurden in vier Mitteldestillaten geprüft. Es handelt sich dabei um Dieselkraftstoffe und leichte Heizöle handelsüblicher europäischer Raffineriequalität; sie werden als MD 1, MD 2, MD 3, und MD 4 bezeichnet und sind durch folgende physikalische Daten charakterisiert:

| | MD1 | MD2 | MD3 | MD4 |
|---|---|---|---|---|
| Cloud Point (°C) nach ISO 3015 | +3 | -4 | +6 | -4 |
| CFPP (°C) nach EN 116 | 0 | -10 | +3 | -10 |
| Dichte bei 15°C (kg/m³)nach | | | | |
| ASTM D 4052 | 845 | 819 | 852 | 821 |
| Destillation nach ISO 3405: | | | | |
| Siedeanfang (°C) | 182 | 163 | 162 | 158 |
| 10 % Siedepunkt (°C) | 217 | 192 | 194 | 191 |
| 20 % Siedepunkt (°C) | 237 | 202 | 210 | 205 |
| 50 % Siedepunkt (°C) | 289 | 242 | 262 | 245 |
| 70 % Siedepunkt (°C) | 324 | 277 | 297 | 282 |
| 90 % Siedepunkt (°C) | 360 | 324 | 348 | 337 |
| 95 % Siedepunkt (°C) | 374 | 347 | 371 | 361 |
| Siedeende (°C) | 390 | 370 | 384 | 376 |

### Ferner wurden folgende Erdölmitteldestillatzusammensetzungen geprüft:

Erdölmitteldestillatzusammensetzungen, enthaltend eine der nachstehenden erfindungsgemäßen Mischungen M-A7 bis M-A12, M-B1 bis M-B14 und M-C1 bis M-C2, die 1:4-Kombinationen sind aus einer der Verbindungen der Beispiele A7 bis A12, B1 bis B14 beziehungsweise C1 oder C2, 50 %ig in Solvent Naphtha, und einem Produkt auf Basis von Ethylen/Vinylpropionat, welches unter dem Handelsnamen Keroflux® 3267 von der BASF AG vermarktet wird. Als Vergleich dienten Keroflux® 3267 (V1) allein und dessen 4:1-Abmischung mit der Mischung aus Beispiel C2 aus WO 95/25755 (V2).

Die vorstehenden Mitteldestillate wurden mit den erfindungsgemäßen Kombinationen beziehungsweise den Kombinationen der Vergleichsbeispiele in den in der nachstehenden Tabelle angegebenen Mengen bei 40°C unter Rühren additiviert und anschließend auf Raumtemperatur abgekühlt.

Sodann wurde der "Cold Filter Plugging Point" (CFPP) nach EN 116 bestimmt. Die Ergebnisse sind ebenfalls in der nachstehenden Tabelle 2 zusammengefaßt. Sie zeigen, daß die erfindungsgemäßen Mischungen M-A7 bis M-A12, M-B1 bis M-B14 und M-C1 bis M-C2 zu einem besseren CFPP-Ansprechverhalten der Mitteldestillate führen als Keroflux® 3267 allein (V1) oder dessen 4:1-Abmischung mit der Mischung aus dem Beispiel C2 aus WO 95/25755 (M-V2).

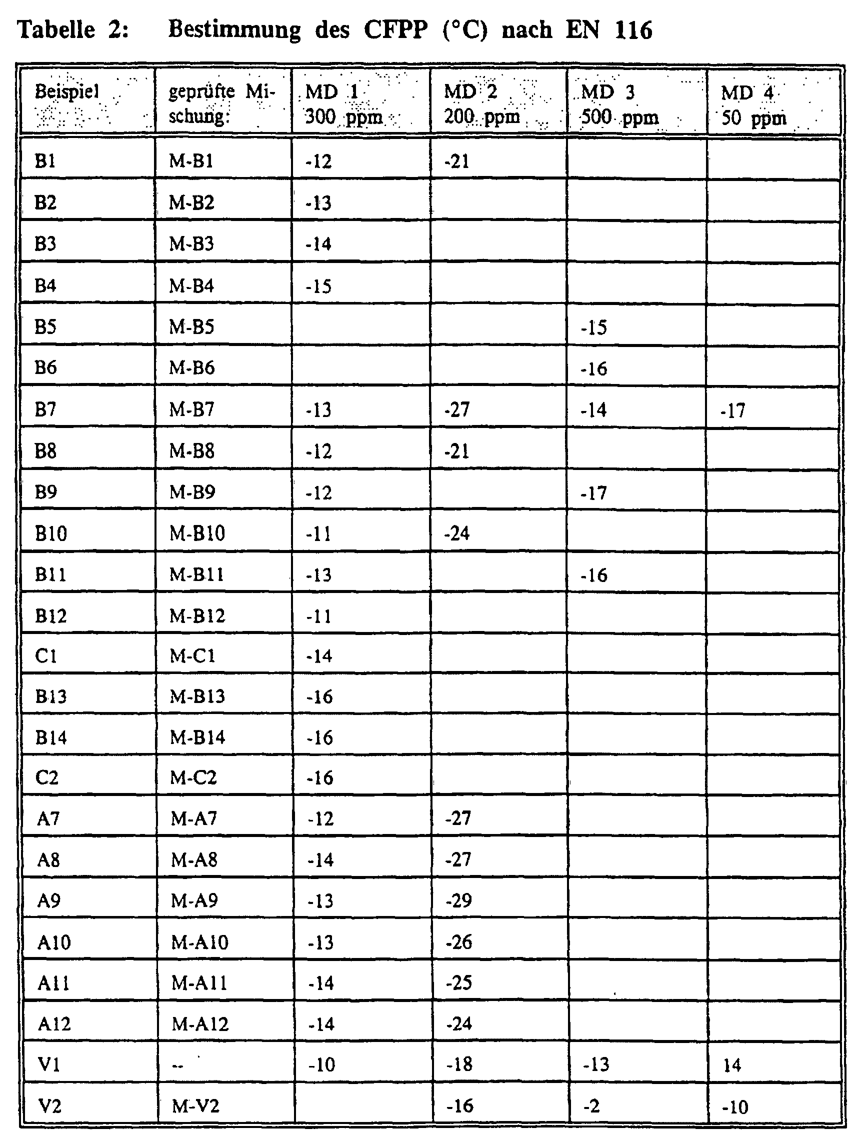

## Patentansprüche

1. Copolymerisat aus den Monomeren der nachstehenden Komponenten A bis C und gegebenenfalls D, deren Gesamtgewicht 100 Mol-% ergibt:
a: 20 bis 80 Mol-% mindestens einer ethylenisch ungesättigten Dicarbonsäure oder eines Anhydrids, Esters und/oder Amids davon als Komponente A,
b: 1 bis 79 Mol-% mindestens eines Diketens der allgemeinen Formel (I) 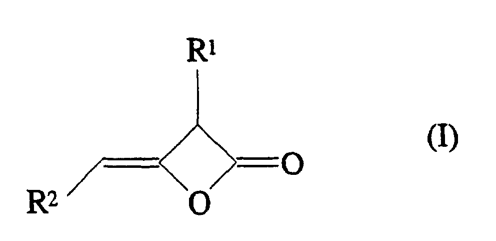 in der R¹ und R² unabhängig Wasserstoff oder C₁₋₃₀-Alkyl bedeuten, als Komponente B,
c: 1 bis 79 Mol-% mindestens eines Vinylesters, (Meth)acrylsäurealkylesters, (Meth)acrylnitril oder Gemischen davon als Komponente C,
d: 0 bis weniger als 0,5 Mol-% oder, sofern mindestens 20 Mol-% der Komponente C vorliegen, 0 bis 20 Mol-% mindestens eines weiteren olefinisch ungesättigten Monomeren als Komponente D.

2. Copolymerisat nach Anspruch 1 mit einem oder mehreren der folgenden Merkmale:
- als Komponente A werden Verbindungen der allgemeinen Formel (II)
R⁴-OC-R³C=CR⁵-CO-R⁶ (II)
eingesetzt, in der R³ und R⁵ unabhängig Wasserstoff oder C₁₋₂₂-Alkyl und
R⁴ und R⁶ unabhängig Wasserstoff oder Reste von NH-, SH- und/oder OH-funktionellen Verbindungen, insbesondere Wasserstoff, -SR⁷, -OR⁸, -NR⁹R¹⁰
oder im Falle von cis-Dicarbonsäureverbindungen R⁴ und R⁶ zusammen -O- oder -NR¹¹-
und R⁷ bis R¹¹ unabhängig C₁₋₂₂-Alkyl oder -Hydroxyalkyl, C₂₋₂₂-Alkenyl, die durch bis zu 3 Sauerstoffatome unterbrochen und/oder aminoalkyliert sein können, Polyetherreste oder Polyaminreste bedeuten,
- als Komponente C werden Vinylester von aliphatischen C₁₋₆-Carbonsäuren, (Meth)acrylsäurealkylester mit aliphatischen C₁₋₁₂-Alkoholen, (Meth)acrylnitril oder Gemische davon eingesetzt,
- als Komponente D wird mindestens eine Verbindung der allgemeinen Formel (III)
H₂C=CR¹²R¹³ (III)
eingesetzt, in der R¹² Wasserstoff oder C₁₋₁₂-Alkyl und R¹³ Wasserstoff, C₁₋₁₂-Alkyl, C₂₋₁₂-Alkenyl oder C₆₋₁₂-Aryl bedeuten.

3. Copolymerisat nach Anspruch 2, **dadurch gekennzeichnet, daß** die NHund/oder OH-funktionelle Verbindung die allgemeine Formel (IV) hat
A-[CHR¹⁴-CHR¹⁵-O-]ₘ [CHR¹⁶-(CH₂-)ₓNH-]ₙH (IV)
in der m eine Zahl im Bereich von 0 bis 100
n eine Zahl im Bereich von 0 bis 5
x eine Zahl im Bereich von 0 bis 5
R¹⁴, R¹⁵, R¹⁶ unabhängig Wasserstoff oder C₁₋₆-Alkyl und
A C₂₋₃₀-Alkoxy oder NR¹⁷R¹⁸ bedeuten, wobei einer der Reste R¹⁷, R¹⁸ Wasserstoff sein kann und mindestens einer der Reste R¹⁷, R¹⁸ von Wasserstoff verschieden und C₁₋₃₀-Alkyl oder C₂₋₃₀-Alkenyl oder -[CHR¹⁹-CHR²⁰-O-]ₚH ist, wobei R¹⁹ und R²⁰ unabhängig Wasserstoff oder C₁₋₆-Alkyl und p eine Zahl von 1 bis 100 bedeuten.

4. Verfahren zur Herstellung eines Copolymerisats nach einem der Ansprüche 1 bis 3, **dadurch gekennzeichnet, daß** die Monomere der Komponenten A bis C und gegebenenfalls D im angegebenen Mengenverhältnis in Gegenwart eines Radikale bildenden Polymerisationsinitiators umgesetzt werden.

5. Verfahren nach Anspruch 4, **dadurch gekennzeichnet, daß** in einem ersten Schritt die Copolymerisation der Monomere durchgeführt wird, wobei als Komponente A mindestens eine ethylenisch ungesättigte Carbonsäure oder ein Anhydrid oder Ester davon eingesetzt wird und in einem zweiten Schritt das erhaltene Copolymerisat mit einer OH- und/oder NH-funktionellen Verbindung, wie sie in Anspruch 3 definiert ist, umgesetzt wird.

6. Gemisch aus 5 bis 95 Gew.-% mindestens eines Copolymerisats nach einem der Ansprüche 1 bis 4 und 5 bis 95 Gew.-% mindestens eines Ethylen/Vinylcarboxylat-Copolymerisats, gegebenenfalls gelöst in einem Lösemittel.

7. Konzentrat, enhaltend 20 bis 70 Gew.-% mindestens eines Copolymers nach einem der Ansprüche 1 bis 3 und/oder eines Gemisches nach Anspruch 6 gelöst in einem Lösemittel.

8. Verwendung von Copolymerisaten nach einem der Ansprüche 1 bis 3 oder Gemischen nach Anspruch 6 oder Konzentraten nach Anspruch 7 als Zusatz für Erdölmitteldestillate.

9. Verwendung nach Anspruch 8 als Fließverbesserer oder Paraffindispergator.

10. Erdölmitteldestillat, enthaltend mindestens ein Copolymer nach einem der Ansprüche 1 bis 3 und/oder ein Gemisch nach Anspruch 6 und/oder ein Konzentrat nach Anspruch 7.

## Claims

1. A copolymer of the monomers of the following components A to C and, if required, D, the total amount by weight of which is 100 mol %:
a: from 20 to 80 mol % of at least one ethylenically unsaturated dicarboxylic acid or of an anhydride, ester or amide thereof as component A,
b: from 1 to 79 mol % of at least one diketene of the formula (I) 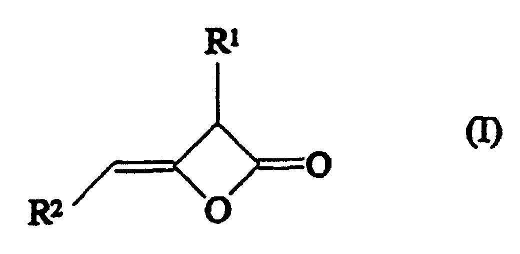 where R¹ and R² independently are each hydrogen or C₁-C₃₀-alkyl, as component B,
c: from 1 to 79 mol % of at least one vinyl ester, alkyl (meth)acrylate, (meth)acrylonitrile or mixtures thereof as component C and
d: from 0 to less than 0.5 mol % or, if at least 20 mol % of component C are present, from 0 to 20 mol % of at least one further olefinically unsaturated monomer as component D.

2. A copolymer as claimed in claim 1, having one or more of the following features:
- compounds of the formula (II)
R⁴-OC-R³C=CR⁵-CO-R⁶ (II)
where R³ and R⁵ independently are each hydrogen or C₁-C₂₂-alkyl and
R⁴ and R⁶ independently are each hydrogen or a radical of an NH-, SH- or OH-functional compound, in particular hydrogen, -SR⁷, -OR⁸ or-NR⁹R¹⁰,
or, in the case of cis-dicarboxylic acid compounds, R⁴ and R⁶ together are -O- or -NR¹¹-
and R⁷ to R¹¹ independently are each C₁-C₂₂-alkyl, C₁-C₂₂-hydroxyalkyl or C₂-C₂₂-alkenyl, each of which may be interrupted by up to 3 oxygen atoms or aminoalkylated, or a polyether radical or polyamine radical, are used as component A,
- vinyl esters of aliphatic C₁-C₆-carboxylic acids, alkyl (meth)acrylates with aliphatic C₁-C₁₂-alcohols, (meth)acrylonitrile or mixtures thereof are used as component C,
- at least one compound of the formula (III)
H₂C=CR¹²R¹³ (III)
where R¹² is hydrogen or C₁-C₁₂-alkyl and R¹³ is C₁-C₁₂-alkyl, C₂-C₁₂-alkenyl or C₆-C₁₂-aryl is used as component D.

3. A copolymer as claimed in claim 2, wherein the NH-or OH-functional compound is of the formula (IV)
A-[CHR¹⁴-CHR¹⁵-O-]ₘ[CHR¹⁶- (CH₂-)ₓNH-]ₙH (IV)
where m is from 0 to 100,
n and x are each from 0 to 5,
R¹⁴, R¹⁵ and R¹⁶ independently are each hydrogen or C₁-C₆-alkyl and
A is C₂-C₃₀-alkoxy or NR¹⁷R¹⁸, where one of the radicals R¹⁷ and R¹⁸ may be hydrogen and at least one of the radicals R¹⁷ and R¹⁸ differs from hydrogen and is C₁-C₃₀-alkyl or C₂-C₃₀-alkenyl or -[CHR¹⁹-CHR²⁰-O-]ₚH, R¹⁹ and R²⁰ independently each being hydrogen or C₁-C₆-alkyl and p being from 1 to 100.

4. A process for the preparation of a copolymer as claimed in any of claims 1 to 3, wherein the monomers of components A to C and, if desired, D are reacted in the stated ratio in the presence of a free radical polymerization initiator.

5. A process as claimed in claim 4, wherein the copolymerization of the monomers is carried out in a first step, at least one ethylenically unsaturated carboxylic acid or an anhydride or ester thereof being used as component A and, in a second step, the copolymer obtained is reacted with an OH- or NH-functional compound as defined in claim 3.

6. A mixture of from 5 to 95% by weight of at least one copolymer as claimed in any of claims 1 to 4 and from 5 to 95% by weight of at least one ethylene/vinyl carboxylate copolymer, if necessary dissolved in a solvent.

7. A concentrate containing from 20 to 70% by weight of at least one copolymer as claimed in any of claims 1 to 3 or of a mixture as claimed in claim 6 dissolved in a solvent.

8. The use of a copolymer as claimed in any of claims 1 to 3 or of a mixture as claimed in claim 6 or of a concentrate as claimed in claim 7 as an additive for mineral oil middle distillates.

9. The use as claimed in claim 8 as a flow improver or a paraffin dispersant.

10. A mineral oil middle distillate containing at least one copolymer as claimed in any of claims 1 to 3 or a mixture as claimed in claim 6 or a concentrate as claimed in claim 7.

## Revendications

1. Copolymère obtenu à partir des monomères des composants A à C ci-après et éventuellement D, dont le poids total fait 100 % en moles :
a : 20 à 80 % en moles d'au moins un acide dicarboxylique à insaturation éthylénique, ou d'un anhydride, ester et/ou amide de cet acide, en tant que composant A,
b : 1 à 79 % en moles d'au moins un dicétène de formule générale (I) 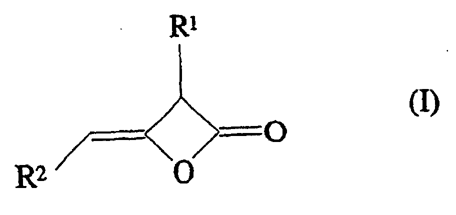 dans laquelle R¹ et R² représentent chacun indépendamment de l'autre un atome d'hydrogène ou un groupe alkyle en C₁₋₃₀, en tant que composant B,
c : 1 à 79 % en moles d'au moins un ester vinylique, d'un (méth)acrylate d'alkyle, de (méth)acrylonitrile ou de mélange de ces derniers, en tant que composant C,
d : 0 à moins de 0,5 % en moles ou encore, si l'on est en présence d'au moins 20 % en moles du composant C, 0 à 20 % en moles d'au moins un autre monomère à insaturation oléfinique, en tant que composant D.

2. Copolymère selon la revendication 1, présentant une ou plusieurs des particularités suivantes :
- en tant que composant A, on utilise des composés de formule générale (II)
R⁴-OC-R³C=CR⁵-CO-R⁶ (II)
dans laquelle R³ et R⁴ représentent chacun un atome d'hydrogène ou un groupe alkyle en C₁₋₂₂, et
R⁴ et R⁶ représentent chacun un atome d'hydrogène ou le résidu de composés à fonctionnalité NH, SH et/ou OH, en particulier l'atome d'hydrogène, -SR⁷, -OR⁸, -NR⁹R¹⁰,
ou encore, dans le cas des composés acides cis-dicarboxyliques, R⁴ et R⁵ forment ensemble -O- ou -NR¹¹-,
et R⁷ à R¹¹ représentent chacun indépendamment de l'autre un groupe alkyle ou hydroxyalkyle en C₁₋₂₂, alcényle en C₂₋₂₂ pouvant être interrompu par jusqu'à 3 atomes d'oxygène et/ou qui peut être aminoalkylé, un résidu polyéther ou un résidu polyamine,
- on utilise en tant que composant C les esters vinyliques d'acides carboxyliques aliphatiques en C₁₋₆, les esters alkyliques de l'acide (méth)acrylique avec des alcools aliphatiques en C₁₋₁₂, le (méth)acrylonitrile ou des mélanges de ces derniers,
- on utilise en tant que composant D au moins un composé de formule générale (III)
H₂C=CR¹²R¹³ (III)
dans laquelle R¹² est un atome d'hydrogène ou un groupe alkyle en C₁₋₁₂, et R¹³ est un atome d'hydrogène ou un groupe alkyle en C₁₋₁₂, alcényle en C₂₋₁₂ ou aryle en C₆₋₁₂.

3. Copolymère selon la revendication 2, **caractérisé en ce que** le composé à fonctionnalité NH et/ou OH a la formule générale (IV)
A-[CHR¹⁴-CHR¹⁵-O-]ₘ[CHR¹⁶-(CH₂-)ₓNH-]ₙH (IV)
dans laquelle m est un nombre compris entre 0 et 100,
n est un nombre compris entre 0 et 5,
x est un nombre compris entre 0 et 5,
R¹⁴, R¹⁵, R¹⁶ représentent chacun indépendamment des autres un atome d'hydrogène ou un groupe alkyle en C₁₋₆, et
A est un groupe alcoxy en C₂₋₃₀ ou NR¹⁷R¹⁸, l'un des radicaux R¹⁷, R¹⁸ pouvant être un atome d'hydrogène, et au moins l'un des radicaux R¹⁷, R¹⁸ est différent de l'hydrogène et est un groupe alkyle en C₁₋₃₀ ou alcényle en C₂₋₃₀ ou -[CHR¹⁹-CHR²⁰-O-]ₚH où R¹⁹ et R²⁰ représentent chacun indépendamment de l'autre un atome d'hydrogène ou un groupe alkyle en C₁₋₆, et p est un nombre de 1 à 100.

4. Procédé de préparation d'un copolymère selon l'une des revendications 1 à 3, **caractérisé en ce que** les monomères des composants A à C et éventuellement D sont mis à réagir selon les proportions pondérales indiquées, en présence d'un amorceur de polymérisation formant des radicaux.

5. Procédé selon la revendication 4, **caractérisé en ce qu'**on met en oeuvre dans une première étape la copolymérisation des monomères, en utilisant en tant que composant A au moins un acide carboxylique à insaturation éthylénique ou un anhydride ou ester de cet acide, et, dans une deuxième étape, on fait réagir le copolymère ainsi obtenu avec un composé à fonctionnalité OH et/ou NH tel que défini dans la revendication 3.

6. Mélange de 5 à 95 % en poids d'au moins un copolymère selon l'une des revendications 1 à 4 et de 5 à 95 % en poids d'au moins un copolymère éthylène/carboxylate de vinyle, éventuellement dissous dans un solvant.

7. Concentré contenant de 20 à 70 % en poids d'au moins un copolymère selon l'une des revendications 1 à 3 et/ou d'un mélange selon la revendication 6, dissous dans un solvant.

8. Utilisation de copolymères selon l'une des revendications 1 à 3 ou de mélanges selon la revendication 6 ou de concentrés selon la revendication 7 en tant qu'additif pour distillats pétroliers moyens.

9. Utilisation selon la revendication 8 en tant qu'agent améliorant l'écoulement, ou dispersant de paraffines.

10. Distillat pétrolier moyen contenant au moins un copolymère selon l'une des revendications 1 à 3 et/ou un mélange selon la revendication 6 et/ou un concentré selon la revendication 7.
